# EUROPEAN PATENT SPECIFICATION

(11) **EP 3 549 829 B1**
(45) Date of publication and mention of the grant of the patent: **18.03.2020**
(21) Application number: 18165910.3
(22) Date of filing: 05.04.2018
(51) Int. Cl.: B60R 21/201, B60R 21/217

(54) **AIRBAG ASSEMBLY WITH A SINGLE PROTECTIVE WRAPPER**
AIRBAGANORDNUNG MIT EINER EINZIGEN SCHUTZHÜLLE
ENSEMBLE COUSSIN GONFLABLE COMPORTANT UN SEUL EMBALLAGE DE PROTECTION

(43) Date of publication of application: 09.10.2019
(73) Proprietor: Autoliv Development AB, 447 83 Vårgårda (SE)
(72) Inventor: Knutsson, Stefan, 44735 Vargarda (SE); Johansson, Markus, 44791 Vargarda (SE); Pretot, Stephane, 44332 Lerum (SE)
(74) Representative: Feucker, Max Martin

(56) References cited:
- WO-A1-2010/121730
- WO-A1-2011/026849
- DE-A1- 19 940 360
- DE-A1-102014 005 099
- US-A1- 2007 164 541
- US-B2- 9 682 678

## Description

The present invention is directed to an airbag assembly, comprising a housing, an airbag cushion and a protective wrapper for securing the airbag cushion within the housing.

For assembling an airbag module it is known to fold the airbag cushion and to pack the folded airbag cushion into a first protective fabric. This way an airbag cushion assembly is provided. In a subsequent step the preassembled airbag cushion assembly is introduced into the housing through an opening of the housing. In order to avoid crowning of the preassembled airbag cushion assembly over the opening of the housing and in order to avoid that the airbag cushion or the protective fabric is fixed between the flange of the housing and the backside of an instrument panel during mounting, a second protective fabric is fixed to the housing, wherein the second fabric covers the opening of the housing and forces the preassembled airbag cushion assembly into the housing. Such airbag assembly desires multiple mounting steps and the use of multiple protective fabrics. This configuration has the further disadvantage that the two layers of fabric cause friction between them, when the airbag cushion is deployed.

If the airbag cushion is directly folded into the housing a protective fabric covering the opening of the housing is also needed to secure the airbag cushion within the housing. During mounting of the fabric to the housing, it needs to be made sure that the airbag cushion does not extend to the upper side of the flange of the housing. Accordingly, such mounting is quite sophisticated.

US 9,682,678 B2 discloses preassembling an airbag cushion assembly with only one wrapper as protective fabric. This wrapper is fixed to the housing in the inner of the housing together with the gas generator. Furthermore, US 9,682,678 B2 desires that a pocket is formed by the upper side of the wrapper for guiding the airbag cushion during deployment. Accordingly, if crowning during mounting of an airbag assembly according to US 9,682,678 B2 shall be avoided an additional fabric would also be needed.

A further airbag assembly is known from WO 2010/121730 A1, wherein a protective cover is connected to a gas generator within the housing with its one end and to a flange with its other end.

DE 199 40 360 A1 discloses an airbag assembly with the features of the preamble of claim 1. A further airbag assembly is known from US 2007/0164541 A1, wherein at least two flaps are connected with the airbag cushion in order to fix the airbag cushion within the housing.

It is therefore an object of the present invention to provide an airbag assembly which can be assembled more easily and with which friction during deployment is minimized.

This object is achieved by an airbag assembly according to the independent claim. Particular embodiments of the airbag assembly are described in the dependent claims and in the description, wherein single features of the preferred embodiments can be combined with each other in a technically meaningful manner.

The object is solved in particular by an airbag assembly, comprising
- a housing,
- an airbag cushion and
- a single protective wrapper having fastening means with which the wrapper is fastened to the housing, wherein
   - the housing has an opening through which the airbag cushion can be deployed and a flange delimiting the opening, and
   - the wrapper is wrapped around the airbag cushion and covers the airbag cushion completely on the side of opening, and
   - the fastening means of the wrapper extend to or over an upper side of the flange of the housing.

According to the present invention the single protective wrapper has a triple function. The single wrapper keeps the folded airbag cushion in its desired folded state, the wrapper fastens the airbag cushion to the housing and at the same time the wrapper minimizes that the folded airbag cushion crowns over the opening of the airbag. This way it is also achieved that the airbag cushion can be wrapped and installed in the housing in one single mounting step. The folded airbag cushion is wrapped by the single protective wrapper, which immediately afterwards is fastened to the housing, thereby avoiding the need for an additional fabric, which would cause friction.

The invention is in particular directed to a passenger airbag assembly, in which the housing may comprise four sidewalls and a bottom wall. The housing has an opening at its upper side, wherein the opening is at least partially surrounded by a flange, with which the housing can be fastened in particular to a back side of an instrument panel of a vehicle. In particular, the airbag cushion is located between the walls and the opening of the housing, wherein the wrapper would be arranged between the folded airbag cushion and the walls. A gas generator may be arranged within the airbag cushion and may extend with fastening pins through a wall of the housing.

The wrapper is in particular made of a woven fabric, which may be coated appropriately. Preferably, the wrapper is made of a single woven fabric, which is cut to a desired shape. However, the single protective wrapper may also comprise multiple parts which are connected for example by sewing to form the single protective wrapper.

The fastening means of the wrapper may be fastened to the housing on the upper side of the flange, at the underside of the flange or to an outer side of a wall of the housing beneath the flange. Furthermore, tabs for fastening the fastening means to the housing may be formed on the lateral outer side of the flange, the tabs preferably extending in the plane of the flange. This way the airbag cushion can be compressed in a compact manner within the housing, while the fastening means of the wrapper can be easily fixed to the housing.

The fastening means of the wrapper comprise a first group of at least one first fastening element and a second group of at least one second fastening element, the first group of the first fastening element and the second group of the second fastening element being arranged on opposite ends of the wrapper and extending to opposite sides of the flange, wherein a central section of the wrapper between the first and the second group of fastening elements is wrapped around the airbag cushion. Preferably, one, two or more first fastening elements may be arranged on a first end of the wrapper, while two or more second fastening elements are arranged on a second end of the wrapper, the first end and the second end being arranged on opposite sides of the wrapper, when the wrapper is laid down in a flat manner.

The fastening elements may be formed in one piece with the central section of the wrapper. For example, each fastening element may be formed by a comparably narrow strip of fabric extending from the central section of the wrapper. This strip may be formed in one piece with the central section of the wrapper. But it may also be possible that the fastening element is formed by an end section of the wrapper without having a specific shape. Each fastening element may comprise or may be formed by a hole, wherein each hole is secured to a hook arranged on an underside of or beneath the flange of the housing. This way the wrapper can easily be fastened to the housing by hooking the hole onto the hook.

The at least one first fastening element may be arranged centrally at the first end of the wrapper, whereas at the second end of the wrapper the second fastening elements are arranged at each lateral side of the wrapper laterally displaced to the at least one first fastening element. Accordingly, at the second end the wrapper is fastened at the lateral outer sides to the housing, while at the first end the wrapper is fastened to the housing at a more central location with regard to the respective side of the housing.

In particular in this regard it can be preferable, if a first width of the wrapper at a first end comprising the first group of first fastening element(s) is smaller than a second width of the wrapper at a second end comprising the second group of second fastening element(s), wherein at least one cut out may be formed between the second fastening elements of the second group at the second end of the wrapper, so that in the wrapped state at least a section of a first end of the wrapper comprising the first fastening element of the first group extends through the cut out on the second end. This way the wrapper covers the whole airbag cushion easily toward the opening of the housing in the assembled state so that no foreign parts can fall towards the airbag cushion. The width of the cut out is preferably the same size or slightly smaller than the width of the first end, if only one cut out is formed.

In this respect, it can also be provided that the wrapper has wings in particular formed laterally outside to the second fastening elements arranged on the lateral sides of the wrapper, wherein the wings are tucked over the airbag cushion, so that the airbag cushion is completely covered by the wrapper. The wing(s) are formed on that part of the wrapper, which covers the folded airbag cushion towards the opening of the housing. The wings protrude laterally to the outside.

In order that the airbag cushion can be easily deployed, a tear line can be formed in the wrapper, wherein the tear line is arranged in that part(s) of the wrapper, which faces the opening of the housing. In particular, the tear line is formed of multiple sections formed in different sections of the wrapper, wherein the multiple sections of the tear line are aligned in the wrapped state. The tear line or the tear line sections are preferably formed by material weakenings formed in the material of the wrapper. For example, cut outs or slits can be formed as material weakenings for forming the tear line (sections). Preferably, the tear line sections are formed between the central section of the wrapper and the fastening element(s) extending from the central sections.

The invention and the technical background are explained with reference to the enclosed figures as way of example. The figures show schematically
- Figure 1:: a cross sectional view through an airbag assembly,
- Figure 2:: a wrapper in a laid out state and
- Figure 3:: the airbag assembly in top view.

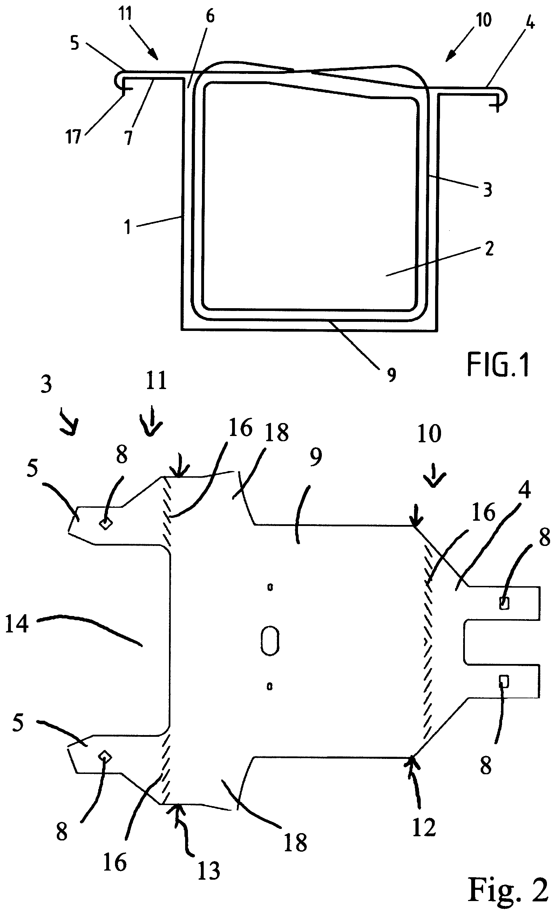

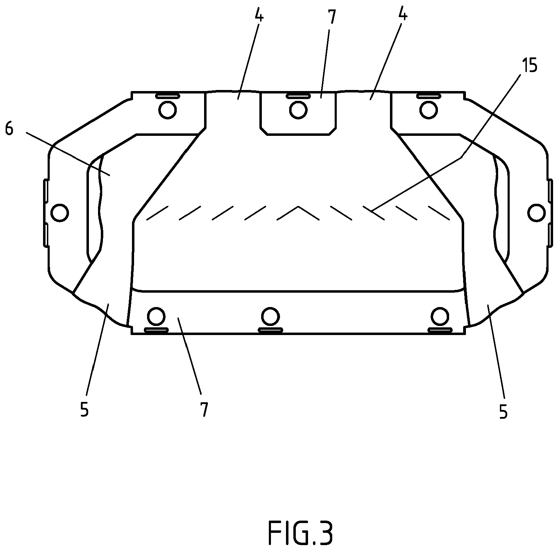

The airbag assembly shown in figures 1 and 3 comprises a housing 1, which has side walls, a bottom wall and an opening 6 at the upper side. The opening 6 is surrounded by a flange 7, wherein hooks 17 are formed on the underside of the flange 7.

The airbag assembly further comprises a folded airbag cushion 2 located within the housing 1.

The airbag assembly further comprises a wrapper 3, which is wrapped around the folded airbag cushion 2 with a central section 9. The wrapper 3 further comprises a first end 10 with first fastening elements 4 and a second end 11 with second fastening elements 5. The first fastening elements 4 and the second fastening elements 5 comprise each a hole 8, which are hooked onto the hooks 17 formed on the underside of the flange 7.

In figure 2 the wrapper 3 is shown in an unwrapped, flat state. It can be seen that a first width 12 at a first end 10 is smaller than a second width 13 at a second end 11 of the wrapper 3.

Additionally, it can be seen in particular from figure 2 that a cut out 14 is formed at the second end 11 of the wrapper. In the assembled (wrapped) state the first fastening elements 4 extend through the cut out 14 (see also figure 3).

It can also be seen from figure 2, that tear line sections 16 are formed between the central section 9 and the fastening elements 4, 5. These tear line sections 16 are aligned to a tear line 15 in the assembled state as can be seen from figure 3.

With the present invention the wrapper 3 can hold the folded airbag cushion 2 and simultaneously can fasten the airbag cushion 2 to the housing 1, wherein at the same time it is minimized that the airbag cushion 2 protrudes ("crowns") over the opening 6 of the housing 1. As only one wrapper 3 is needed, friction during deployment can be minimized or even avoided.

### List of refence number

- 1: housing
- 2: airbag cushion
- 3: wrapper
- 4: first fastening element
- 5: second fastening element
- 6: opening
- 7: flange
- 8: hole
- 9: central section
- 10: first end
- 11: second end
- 12: first width
- 13: second width
- 14: cut out
- 15: tear line
- 16: tear line section
- 17: hook
- 18: wing

## Claims

1. Airbag assembly, comprising
- a housing (1),
- an airbag cushion (2) and
- a single protective wrapper (3) having fastening means (4, 5, 8) with which the wrapper (3) is fastened to the housing (1), wherein
- the housing (1) has an opening (6) through which the airbag cushion (2) can be deployed and a flange (7) delimiting the opening (6) at least partly, and
- the wrapper (3) is wrapped around the airbag cushion (2) and covers the airbag cushion (2) completely on the side of the opening (6), and
- the fastening means of the wrapper (3) extend to or over an upper side of the flange (7) of the housing (1), wherein the fastening means comprise a first group of at least one first fastening element (4) and a second group of at least one second fastening element (5), the first group of the first fastening element (4) and the second group of the second fastening element (5) being arranged on opposite ends of the wrapper (3) **characterized in that** the first group of the first fastening element (4) and the second group of the second fastening element (5) extend to opposite sides of the flange (7), **characterized in that** a central section (9) of the wrapper (3) between the first and second group of fastening elements (4, 5) is wrapped around the airbag cushion (2).

2. Airbag assembly according to claim 1, wherein at a first end (10) of the wrapper (3) the at least one first fastening element (4) is arranged centrally and at a second end (11) of the wrapper (3) the second fastening elements (5) are arranged laterally displaced towards the outside with respect to the at least one first fastening element (4).

3. Airbag assembly according to claim 1 or 2, wherein a first width (12) of the wrapper (3) at a first end (10) comprising the first group of first fastening elements (4) is smaller than a second width (13) of the wrapper (3) at a second end (11) comprising the second group of second fastening elements (5).

4. Airbag assembly according to one of claims 1-3, wherein at least one cut out (14) is formed between the second fastening elements (5) of the second group at a second end (11) of the wrapper (3), wherein in the wrapped state at least a section of the wrapper (3) comprising a first fastening element (4) of the first group extends through the cut out (14) on the second end (11).

5. Airbag assembly according to one of the preceding claims, wherein at least one wing (18) is formed on a lateral side of the wrapper (3), wherein the wing (18) is tucked over the airbag cushion (2), so that the airbag cushion (2) is completely covered by the wrapper (3).

6. Airbag assembly according to one of the preceding claims, wherein a tear line (15) is formed in the wrapper (3), the tear line (15) being arranged on the side of the opening (6).

7. Airbag assembly according to claim 6, wherein the tear line (15) is formed of multiple sections (16) formed in different sections of the wrapper (3), wherein the multiple sections (16) of the tear line (15) are aligned in the wrapped state.

8. Airbag assembly according to one of the preceding claims, wherein each fastening element (4, 5) of the fastening means comprises a hole (8) in the wrapper (3), wherein each hole (8) is secured to a hook (17) on an underside of or beneath the flange (7).

9. Airbag assembly according to one of the preceding claims, wherein at least one fastening element (4,5) is fastened to an upper side of the flange (7), to an underside of the flange (7), to an outer side of a wall of the housing (1) beneath the flange (7) or to a lateral outer side of the flange (7).

## Patentansprüche

1. Airbaganordnung, umfassend
- ein Gehäuse (1),
- ein Airbagkissen (2) und
- eine einzelne Schutzhülle (3) mit Befestigungsmitteln (4, 5, 8), mit denen die Hülle (3) an dem Gehäuse (1) befestigt ist, wobei
- das Gehäuse (1) eine Öffnung (6) aufweist, durch die das Airbagkissen (2) entfaltet werden kann, und einen Flansch (7), der die Öffnung (6) wenigstens teilweise begrenzt, und
- die Hülle (3) um das Airbagkissen (2) gewickelt ist und das Airbagkissen (2) vollständig an der Seite der Öffnung (6) bedeckt, und
- sich die Befestigungsmittel der Hülle (3) bis oder über eine Oberseite des Flansches (7) des Gehäuses (1) erstrecken, wobei die Befestigungsmittel eine erste Gruppe von wenigstens einem ersten Befestigungselement (4) und eine zweite Gruppe von wenigstens einem zweiten Befestigungselement (5) umfassen, wobei die erste Gruppe des ersten Befestigungselements (4) und die zweite Gruppe des zweiten Befestigungselements (5) an gegenüberliegenden Enden der Hülle (3) angeordnet sind, **dadurch gekennzeichnet, dass** sich die erste Gruppe des ersten Befestigungselements (4) und die zweite Gruppe des zweiten Befestigungselements (5) zu gegenüberliegenden Seiten des Flansches (7) erstrecken, **dadurch gekennzeichnet, dass** ein Zentralteil (9) der Hülle (3) zwischen der ersten und zweiten Gruppe von Befestigungselementen (4, 5) um das Airbagkissen (2) gewickelt ist.

2. Airbaganordnung nach Anspruch 1, wobei an einem ersten Ende (10) der Hülle (3) das wenigstens eine erste Befestigungselement (4) zentral angeordnet ist und an einem zweiten Ende (11) der Hülle (3) die zweiten Befestigungselemente (5) hinsichtlich des wenigstens einen ersten Befestigungselements (4) seitlich nach außen versetzt angeordnet sind.

3. Airbaganordnung nach Anspruch 1 oder 2, wobei eine erste Breite (12) der Hülle (3) an einem ersten Ende (10), umfassend die erste Gruppe von ersten Befestigungselementen (4), kleiner als eine zweite Breite (13) der Hülle (3) an einem zweiten Ende (11), umfassend die zweite Gruppe von zweiten Befestigungselementen (5), ist.

4. Airbaganordnung nach einem der Ansprüche 1-3, wobei wenigstens ein Ausschnitt (14) zwischen den zweiten Befestigungselementen (5) der zweiten Gruppe an einem zweiten Ende (11) der Hülle (3) ausgebildet wird, wobei sich in dem umwickelten Zustand wenigstens ein Teil der Hülle (3), umfassend ein erstes Befestigungselement (4) der ersten Gruppe, durch den Ausschnitt (14) an dem zweiten Ende (11) erstreckt.

5. Airbaganordnung nach einem der vorhergehenden Ansprüche, wobei wenigstens ein Flügel (18) an einer lateralen Seite der Hülle (3) ausgebildet ist, wobei der Flügel (18) über dem Airbagkissen (2) gefaltet ist, so dass das Airbagkissen (2) vollständig von der Hülle (3) bedeckt ist.

6. Airbaganordnung nach einem der vorhergehenden Ansprüche, wobei eine Risslinie (15) in der Hülle (3) ausgebildet ist, wobei die Risslinie (15) an der Seite der Öffnung (6) angeordnet ist.

7. Airbaganordnung nach Anspruch 6, wobei die Risslinie (15) aus mehreren Teilen (16) ausgebildet ist, die in verschiedenen Teilen der Hülle (3) ausgebildet sind, wobei die mehreren Teile (16) der Risslinie (15) in dem eingewickelten Zustand ausgerichtet sind.

8. Airbaganordnung nach einem der vorhergehenden Ansprüche, wobei jedes Befestigungselement (4, 5) des Befestigungsmittels ein Loch (8) in der Hülle (3) umfasst, wobei jedes Loch (8) an einem Haken (17) an einer Unterseite oder unterhalb des Flansches (7) angebracht ist.

9. Airbaganordnung nach einem der vorhergehenden Ansprüche, wobei wenigstens ein Befestigungselement (4, 5) an einer Oberseite des Flansches (7), an einer Unterseite des Flansches (7), an einer Außenseite einer Wand des Gehäuses (1) unterhalb des Flansches (7) oder an einer lateralen Außenseite des Flansches (7) befestigt ist.

## Revendications

1. Ensemble sac gonflable, comprenant
- un boîtier (1),
- un coussin de sac gonflable (2) et
- une enveloppe de protection unique (3) comportant des moyens de fixation (4, 5, 8) avec lesquels l'enveloppe (3) est fixée au boîtier (1), dans laquelle
- le boîtier (1) présente une ouverture (6) à travers laquelle le coussin de sac gonflable (2) peut être déployé et une bride (7) délimitant au moins partiellement l'ouverture (6), et
- l'enveloppe (3) est enroulée autour du coussin de sac gonflable (2) et recouvre complètement le coussin de sac gonflable (2) sur le côté de l'ouverture (6), et
- les moyens de fixation de l'enveloppe (3) s'étendent jusqu'à ou sur un côté supérieur de la bride (7) du boîtier (1), les moyens de fixation comprenant un premier groupe d'au moins un premier élément de fixation (4) et un second groupe d'au moins un second élément de fixation (5), le premier groupe du premier élément de fixation (4) et le second groupe du second élément de fixation (5) étant disposés sur des extrémités opposées de l'enveloppe (3), **caractérisé en ce que** le premier groupe du premier élément de fixation (4) et le second groupe du second élément de fixation (5) s'étendent sur les côtés opposés de la bride (7), **caractérisé en ce qu'**une section centrale (9) de l'enveloppe (3) entre le premier et le second groupe d'éléments de fixation (4, 5) est enroulée autour du coussin de sac gonflable (2).

2. Ensemble sac gonflable selon la revendication 1, dans lequel, à une première extrémité (10) de l'enveloppe (3), au moins un premier élément de fixation (4) est disposé centralement et, à une seconde extrémité, (11) de l'enveloppe (3) les seconds éléments de fixation (5) sont disposés latéralement, déplacés vers l'extérieur par rapport au moins à un premier élément de fixation (4).

3. Ensemble sac gonflable selon la revendication 1 ou 2, dans lequel une première largeur (12) de l'enveloppe (3) au niveau d'une première extrémité (10) comprenant le premier groupe de premiers éléments de fixation (4) est plus petite qu'une seconde largeur (13) de l'enveloppe (3) au niveau d'une seconde extrémité (11) comprenant le second groupe de seconds éléments de fixation (5).

4. Ensemble sac gonflable selon l'une des revendications 1 à 3, dans lequel au moins une découpe (14) est formée entre les seconds éléments de fixation (5) du second groupe à une seconde extrémité (11) de l'enveloppe (3), dans lequel, à l'état enveloppé, au moins une section de l'enveloppe (3) comprenant un premier élément de fixation (4) du premier groupe s'étend à travers la découpe (14) sur la seconde extrémité (11).

5. Ensemble coussin gonflable selon l'une des revendications précédentes, dans lequel au moins une aile (18) est formée sur un côté latéral de l'enveloppe (3), l'aile (18) étant repliée par dessus le coussin de sac gonflable (2), de sorte que le coussin de sac gonflable (2) est complètement recouvert par l'enveloppe (3).

6. Ensemble sac gonflable selon l'une des revendications précédentes, dans lequel une ligne de déchirure (15) est formée dans l'enveloppe (3), la ligne de déchirure (15) étant disposée du côté de l'ouverture (6).

7. Ensemble coussin gonflable selon la revendication 6, dans lequel la ligne de déchirure (15) est formée de plusieurs sections (16) formées dans différentes sections de l'enveloppe (3), les multiples sections (16) de la ligne de déchirure (15) étant alignées à l'état enveloppé.

8. Ensemble coussin gonflable selon l'une des revendications précédentes, dans lequel chaque élément de fixation (4, 5) des moyens de fixation comprend un trou (8) dans l'enveloppe (3), chaque trou (8) étant fixé à un crochet (17) sur un côté inférieur à ou en dessous de la bride (7).

9. Ensemble coussin gonflable selon l'une des revendications précédentes, dans lequel au moins un élément de fixation (4, 5) est fixé à un côté supérieur de la bride (7), à un côté inférieur de la bride (7), à un côté extérieur d'une paroi du boîtier (1) sous la bride (7) ou à un côté extérieur latéral de la bride (7).
